Europäisches Patentamt

(19) European Patent Office

Office européen des brevets

(11) **EP 1 100 223 A1**

(12) **DEMANDE DE BREVET EUROPEEN**

(43) Date de publication:
**16.05.2001 Bulletin 2001/20**

(51) Int Cl.⁷: **H04L 7/02**, H04L 12/56,
H04B 7/204, H04B 7/185,
H04L 7/033

(21) Numéro de dépôt: **00203836.2**

(22) Date de dépôt: **02.11.2000**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **10.11.1999 FR 9914182**

(71) Demandeur: **Koninklijke Philips Electronics N.V.
5621 BA Eindhoven (NL)**

(72) Inventeurs:
• **Legrand, Delphine
75008 Paris (FR)**
• **Brajal, Américo
75008 Paris (FR)**
• **Chouly, Antoine
75008 Paris (FR)**

(74) Mandataire: **de la Fouchardière, Marie-Noelle
Société Civile "SPID"
156, Boulevard Haussmann
75008 Paris (FR)**

(54) **Estimation de l'instant d'échantillonnage optimal dans un système de transmissions par paquets TDMA**

(57) L'invention concerne un système de transmission par paquets TDMA entre des terminaux interactifs (2) et une station de tête (1) via un média de transmission (3), dans lequel le récepteur effectue un sur-échantillonnage du signal reçu pour retrouver l'échantillon optimal correspondant au symbole émis. L'invention propose une méthode pour récupérer très rapidement cet instant d'échantillonnage optimal en effectuant un calcul d'interpolation polynomial entre les sur-échantillons générés pour en déduire l'instant d'échantillonnage optimal et un filtrage du signal reçu à l'aide d'un filtre passe-bas centré sur l'instant d'échantillonnage optimal.

Application: systèmes de transmission par paquets TDMA.

FIG.2

EP 1 100 223 A1

## Description

L'invention concerne un récepteur pour système de transmission par paquets comportant des moyens de réception pour recevoir un signal à une fréquence symbole, des moyens de sur-échantillonnage pour générer des sur-échantillons à partir du signal reçu à une fréquence multiple de la fréquence symbole et un dispositif de recherche de l'instant d'échantillonnage optimal pour estimer à partir des sur-échantillons générés un retard correspondant au signal reçu.

Elle concerne également un système de transmission par paquets comportant un tel récepteur.

L'invention concerne enfin un procédé d'estimation d'un instant d'échantillonnage optimal en réception pour système de transmission par paquets, comportant :

- une étape de réception pour recevoir un signal dit signal reçu,
- une étape de sur-échantillonnage pour générer des sur-échantillons à partir du signal reçu,
- une étape de recherche d'un instant d'échantillonnage optimal pour estimer à partir des sur-échantillons générés un retard correspondant au signal reçu.

L'invention a d'importantes applications dans le domaine des transmissions par satellite ou par câble et notamment dans les transmissions avec voies de retour, dans lesquelles une pluralité de terminaux sont susceptibles de transmettre des paquets de données vers une station de tête selon un mécanisme de répartition des ressources en temps.

L'ouvrage intitulé « Digital Communication Receivers Synchronisation Channel Estimation and Signal Processing » de H. Meyr, M. Moeneclay et S. Fechtel publié aux éditions Wiley Series in Telecommunications and Signal Processing décrit aux pages 283 à 289 une technique de calcul de l'instant d'échantillonnage optimal. Dans la plupart des systèmes de transmission à répartition temporelle, il est nécessaire d'effectuer un sur-échantillonnage à la réception pour retrouver l'instant d'échantillonnage utilisé à l'émission. La technique décrite dans l'ouvrage cité préconise de calculer les énergies moyennes de chaque échantillon pour sélectionner l'échantillon optimal ayant l'énergie moyenne maximum. Cette technique est coûteuse en nombre de calculs puisqu'elle nécessite de calculer l'énergie moyenne de tous les échantillons reçus représentant un symbole émis avant de décider lequel est l'échantillon optimal.

L'invention a notamment pour but de permettre de récupérer très rapidement l'instant d'échantillonnage optimal en limitant considérablement le nombre de calculs et donc le coût de traitement. Pour cela, un récepteur tel que décrit dans le paragraphe introductif est caractérisé en ce que lesdits moyens de réception comportent un filtre passe-bas et des moyens de centrage pour centrer le filtre passe-bas en fonction dudit retard.

Selon une caractéristique importante de l'invention, le dispositif de recherche de l'instant d'échantillonnage optimal comporte un organe de calcul pour déterminer le maximum des amplitudes moyennes des sur-échantillons et un interpolateur pour calculer un polynôme passant par au moins trois desdites amplitudes moyennes dont le maximum et pour en déduire une estimation dudit retard.

L'invention présente l'avantage de permettre de récupérer très rapidement et avec une faible complexité de calculs l'instant d'échantillonnage optimal pour pouvoir effectuer cette opération pour chaque nouveau paquet reçu en provenance de l'un quelconque des terminaux du système.

L'invention sera mieux comprise et d'autres détails apparaîtront dans la description qui va suivre en regard des dessins annexés qui sont donnés à titre d'exemples non limitatifs et dans lesquels:

- la figure 1 représente un exemple de système de transmission selon l'invention,
- la figure 2 représente un schéma général d'un exemple de réalisation d'un récepteur selon l'invention,
- la figure 3 représente un mode de réalisation préférentiel du récepteur de la figure 2,
- la figure 4 représente un exemple de procédé selon l'invention.

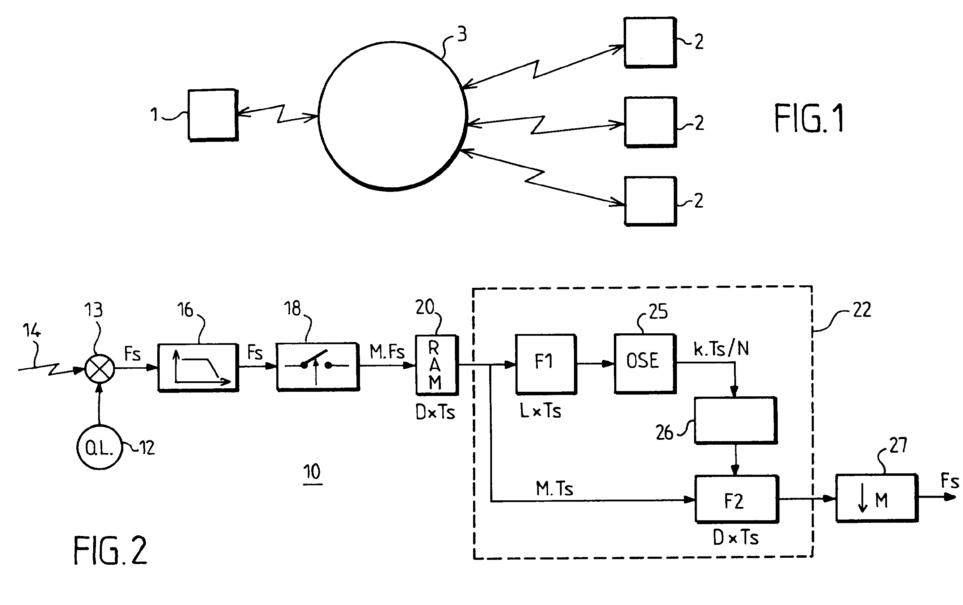

Un système de transmission selon l'invention est représenté à titre d'exemple sur la figure 1. Il comporte une station de tête 1 et une pluralité de terminaux interactifs 2 susceptibles d'émettre et de recevoir des données vers et en provenance de la station de tête en utilisant un média de transmission 3. Les transmissions des terminaux vers la station de tête sont qualifiées de transmissions montantes. Les transmissions de la station de tête vers les terminaux sont qualifiées de transmissions descendantes. Dans les transmissions montantes, la station de tête 1 a la fonction d'un récepteur. Dans les transmissions descendantes chaque terminal a la fonction d'un récepteur. L'accès des terminaux au média de transmission se fait par exemple en utilisant un mécanisme d'accès multiple à répartition temporelle (Time Division Multiple Access en anglais) éventuellement combinée à une répartition en fréquence (Frequency Division Multiple Access en anglais). Le média de transmission peut être de différentes natures : câble, onde hertzienne, satellite, etc.

Dans un système de transmission par paquets à répartition temporelle, des terminaux différents peuvent émettre des données ou symboles dans des intervalles de temps consécutifs avec des instants d'échantillonnage différents du fait que leurs horloges d'émission ne sont pas synchrones. De plus, ces horloges sont susceptibles de présenter une certaine gigue. Deux paquets émis par un même émetteur n'ont donc pas forcément le même instant d'échantillonnage optimal. Par ailleurs, des distorsions dans le canal peuvent provoquer un décalage à l'arrivée. La station de tête ou le récepteur (qui peut être un autre terminal dans le cas d'un système point à point) doit donc effectuer un sur-échantillonnage, c'est-à-dire utiliser une horloge multiple de la fréquence d'échantillonnage théorique, pour retrouver l'instant d'échantillonnage utilisé à l'émission pour émettre les symboles. Par exemple, la fréquence de sur-échantillonnage peut être 16 fois supérieure à la fréquence symbole, ce qui revient à extraire 16 échantillons pendant la durée d'un symbole reçu. Un seul de ces échantillons étant optimal, c'est-à-dire placé à proximité de l'instant où l'émetteur a émis un symbole. L'instant d'échantillonnage optimal peut varier d'un paquet à l'autre c'est pourquoi la station de tête dispose de peu de temps pour retrouver l'instant d'échantillonnage optimal, c'est-à-dire correspondant à l'échantillon le plus proche du symbole émis par les différents terminaux. L'invention apporte notamment l'avantage de permettre de retrouver l'instant d'échantillonnage optimal plus rapidement que la plupart des méthodes classiques tout en diminuant notablement le nombre de traitements effectués

Un schéma général d'un récepteur 10 selon l'invention est représenté sur la figure 2. Il comporte un oscillateur local 12 et un mélangeur 13 pour transposer le signal reçu 14 à la fréquence symbole $F_S$ de telle sorte que le spectre du signal transposé soit centré sur zéro plus ou moins une erreur en fréquence du fait que les oscillateurs locaux utilisés pour émettre sur les fréquences porteuses ne sont pas parfaits. Le signal transposé est alors filtré par un filtre de réjection 16 pour éliminer les fréquences images autour de 2Fp où Fp est la fréquence porteuse d'émission ainsi que les autres porteuses utilisées dans le système. Le signal obtenu en sortie du filtre de réjection 16 est échantillonné par un dispositif de sur-échantillonnage 18 de facteur M entier, destiné à générer M sur-échantillons, notés $S_0$ à $S_{M-1}$ pour chaque symbole du signal transposé. Selon l'invention, les sur-échantillons sont générés à la fréquence $M \times F_S$ avec $M \geq 3$.

La précision de l'instant d'échantillonnage optimal est notée $T_S/N$ où $T_S$ est la durée du symbole et N un nombre d'échantillons par symbole correspondant à la précision recherchée. Selon ce mode de réalisation, le nombre M de sur-échantillons générés par le dispositif de sur-échantillonnage 18 est inférieur ou égal à N, avec $N \geq M \geq 3$. Par exemple pour N=16 on pourra prendre M=3.

Les sur-échantillons sont ensuite stockés dans une mémoire 20, notée RAM sur la figure 2, en vue d'être traités par un dispositif d'estimation de l'instant d'échantillonnage optimal 22 destiné à retrouver l'instant d'échantillonnage optimal correspondant au symbole émis. Le nombre d'échantillons stockés dans la mémoire 20 est égal à $D \times M$ où D est le nombre de symboles contenus dans un paquet et M le nombre de sur-échantillons par symbole. Ils correspondent à une durée égale à $D \times T_S$ où $T_S$ est la durée d'un symbole. Le dispositif d'estimation de l'instant d'échantillonnage optimal 22 comporte un premier filtre passe-bas F1 pour filtrer une partie des échantillons stockés dans la mémoire 20 correspondant à une durée $L \times T_S$, avec $L \leq D$. Le filtre F1 est du type en racine de Nyquist centré autour de zéro, dit aussi filtre optimal adapté au filtre utilisé en émission. Un dispositif de recherche de l'instant d'échantillonnage optimal OSE 25 reçoit les $M \times L$ échantillons filtrés par le premier filtre F1 à M fois la fréquence symbole $F_S$ pour calculer, à partir de ces échantillons, l'échantillon optimal correspondant au symbole émis parmi les N échantillons possibles. L'instant d'échantillonnage optimal est ainsi obtenu avec la précision recherchée égale à $T_S/N$. Un deuxième filtre passe-bas F2 du type en racine de Nyquist pratiquement identique au premier filtre F1 est utilisé cette fois pour filtrer les échantillons stockés dans la mémoire 20, sur toute la durée du paquet c'est-à-dire avec une fenêtre de calcul de durée $D \times T_S$. Comme on connaît la position notée k (k entier), ou le retard noté $k \times T_S/N$, de l'échantillon optimal dans le paquet reçu, des moyens de centrage 26 sont prévus pour centrer temporellement le filtre F2 sur le retard correspondant à cet échantillon optimal. Par exemple, si le filtre F2 est un filtre numérique à coefficients programmables, les moyens de centrage 26 permettent de programmer les coefficient du filtre F2 pour que sa réponse impulsionnelle puisse être centrée sur l'échantillon optimal précédemment calculé, c'est-à-dire sur l'instant $k \times T_S/N$. En sortie du deuxième filtre F2 les échantillons sont délivrés à la fréquence $M \times F_S$. Pour retrouver un signal à la fréquence symbole, un dispositif de décimation 27 est prévu pour sélectionner parmi les M échantillons par symbole en sortie du deuxième filtre F2, uniquement le premier échantillon correspondant à l'instant d'échantillonnage optimal.

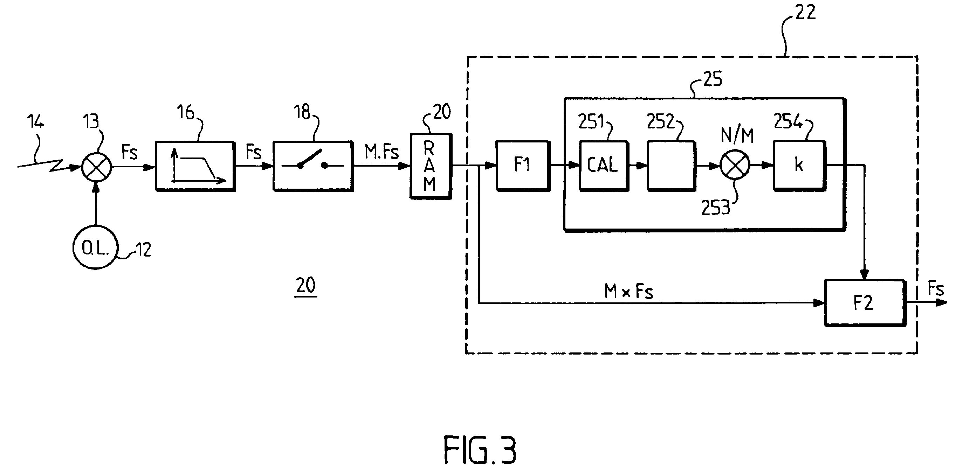

Un mode de réalisation préférentiel d'un récepteur 20 selon l'invention est représenté à titre d'exemple à la figure 3, sur laquelle les blocs ayant des fonctions identiques aux fonctions des blocs de la figure 2 portent les même références. Le dispositif de recherche de l'instant d'échantillonnage optimal 25 comporte un organe de calcul 251 pour calculer les amplitudes moyennes sur la fenêtre de calcul L, de chacun des M sur-échantillons par symbole, notés $S_0$ à $S_{M-1}$, générés par le dispositif de sur-échantillonnage 18 et pour en déduire l'échantillon ayant l'amplitude moyenne maximum représentant une première estimation de l'échantillon optimal. D'après le système considéré, la fonction continue des amplitudes moyennes des sur-échantillons susceptibles de représenter les symboles émis comporte un seul maximum sur la durée symbole. En choisissant un facteur de sur-échantillonnage M suffisant, la fonction discrète des amplitudes de ces sur-échantillons n'a également qu'un seul maximum qui représente une première estimation de l'échantillon optimal. Un interpolateur 252 effectue ensuite une interpolation entre au moins trois valeurs de moyennes précalculées par l'organe de calcul 251, dont le maximum précédemment calculé, pour obtenir une meilleure approximation du véritable maximum de la fonction continue des amplitudes moyennes des sur-échantillons. Ce nouveau maximum correspond à une nouvelle estimation de l'instant d'échantillonnage optimal notée x.

Selon une première variante de réalisation de l'invention, un multiplicateur 253 est prévu pour multiplier l'estimation x obtenue en sortie de l'interpolateur 251 par le coefficient N/M pour ramener l'instant d'échantillonnage calculé sur l'échelle de précision recherchée. On détermine ensuite, à l'aide par exemple d'un comparateur 254, l'entier k le plus proche du produit obtenu $x \times N/M$ qui indique la position de l'échantillon optimal sur la durée symbole correspondant à l'échantillon d'indice k noté $S_K$, avec $0 \leq k \leq N-1$, parmi les N échantillons possibles, notés $S_0$ à $S_{N-1}$. Selon cette variante de réalisation, les moyens de centrage 26 centrent la réponse impulsionnelle du deuxième filtre F2 sur l'échantillon optimal $S_K$ ayant un retard égal à $k \times T_S/N$ par rapport à l'échantillon d'indice zéro. Pour cela, les moyens de centrage 26 calculent les coefficients du deuxième filtre F2 pour que sa réponse impulsionnelle, notée h(t), échantillonnée à $M \times F_S$ soit décalée de $-k \times T_S/N$ par rapport à zéro. Il existe alors N valeurs possibles pour chaque coefficient du filtre selon les N valeurs de k possibles représentant les N possibilités offertes pour l'instant d'échantillonnage optimal. En pratique, les moyens de centrage 26 précalculent ces valeurs pour chaque instant d'échantillonnage possible et les stockent dans des tables pour éviter de les calculer pour chaque paquet reçu.

Selon une deuxième variante de réalisation de l'invention, les moyens de centrage 26 peuvent calculer les coefficients du deuxième filtre F2 pour le véritable instant d'échantillonnage optimal théorique noté x fourni par l'interpolateur 252. Selon cette deuxième variante, les coefficients du filtre doivent être recalculés pour chaque nouveau paquet puisque l'instant théorique optimal est une valeur quelconque continue pouvant être différente pour chaque paquet reçu. Cette variante apporte l'avantage de requérir moins de capacité mémoire que la variante précédente mais comporte l'inconvénient de demander une plus grande puissance de calcul pour être capable de recalculer tous les coefficients du filtre pour chaque paquet.

Parallèlement aux deux variantes précédentes, il existe plusieurs implémentations possibles pour réaliser le deuxième filtre F2 ainsi que les moyens de centrage 26, et l'opération de décimation 27. Par exemple, un processeur de calcul du genre processeur de signal numérique ou DSP peut être utilisé de façon avantageuse pour implémenter les moyens de centrage 26 et le deuxième filtre F2 selon une première implémentation possible qui ne nécessite pas d'opération distincte de décimation. En revanche, si l'on effectue l'opération de décimation 27, un circuit de filtrage classique est plus économique pour le filtre F2, les moyens de centrage 26 servant alors à sélectionner la table de coefficients appropriée en fonction du retard x calculé, fourni par le dispositif de recherche de l'instant d'échantillonnage optimal 25.

Selon l'implémentation avec décimation 27, le filtre F2 reçoit M échantillons en entrée et fournit M échantillons en sortie décalés de $k \times T_S/N$ par rapport aux échantillons d'entrée. Seul le premier échantillon étant significatif, un dispositif de décimation par M 27 doit être prévu en sortie du deuxième filtre pour sélectionner uniquement le premier échantillon. En revanche selon l'implémentation sans décimation, il est plus avantageux de programmer le processeur de signal pour n'effectuer le calcul de convolution du filtrage qu'une seule fois sur toute la durée du paquet $D \times T_S$ pour générer l'échantillon optimal à la fréquence $F_S$. Le calcul des autres échantillons est superflu. Selon cette implémentation, il n'est pas utile de prévoir un décimateur distinct 27 puisque le filtrage et la décimation sont effectués en même temps par le filtre F2.

Les résultats sont indépendants de la méthode utilisée pour le calcul de l'amplitude moyenne. On pourra utiliser par exemple la méthode des puissances au carré qui consiste pour chaque échantillon, à calculer la somme des puissances au carré de tous les échantillons compris dans la fenêtre de calcul utilisée et ayant une même position dans le paquet reçu, c'est-à-dire espacés de la durée du symbole émis notée $T_S$, ou bien la méthode dite du diagramme de l'oeil, dans laquelle au lieu de calculer la somme des puissances au carré, on calcule la somme des valeurs absolues.

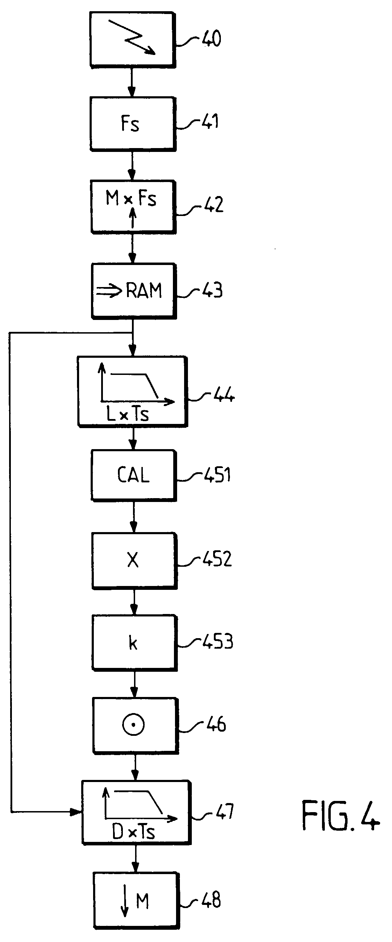

La figure 4 représente les différentes étapes d'un mode de réalisation préférentiel d'un procédé d'estimation de l'instant d'échantillonnage optimal selon l'invention pouvant être mis en oeuvre dans le dispositif d'estimation de l'échantillon optimal 22. Ce procédé comporte les étapes suivantes:

- étape 40 : réception du signal contenant les paquets de données représentant par exemple des symboles émis, chaque paquet contenant D symboles,
- étape 41 : conversion du signal reçu en bande de base,
- étape 42 : sur-échantillonnage du signal en bande de base pour obtenir M échantillons par symbole, avec M>2,
- étape 43 : stockage des échantillons correspondant à un paquet de symboles reçus, c'est-à-dire à une durée égale à $D \times T_S$ où D est le nombre de symboles contenus dans un paquet.
- étape 44 : premier filtrage passe-bas sur un morceau du paquet stocké c'est-à-dire sur une durée égale à $L \times T_S$, avec $L \leq D$, à l'aide d'un premier filtre en racine de Nyquist adapté au filtre utilisé à l'émission, on pourra prendre par exemple L=128 symboles, la valeur de L pouvant dépendre du bruit (d'où une valeur de L pas trop petite) et / ou des imperfections du système telles que l'écart de fréquence porteuse ou de fréquence d'échantillonnage entre l'émetteur et le récepteur (d'où une valeur de L pas trop grande),

- étape 45 : estimation du retard de l'échantillon optimal,
- étape 46 : calcul les coefficients d'un deuxième filtre numérique en racine de Nyquist en fonction du retard estimé à l'étape 45 pour centrer le deuxième filtre sur l'instant correspondant à ce retard,
- étape 47 : deuxième filtrage passe-bas de tous les échantillons stockés à l'étape 43, c'est-à-dire sur une durée égale à $D \times T_S$, à l'aide du deuxième filtre de Nyquist,
- étape 48 : éventuellement décimation pour ne conserver qu'un seul échantillon par symbole sur les M échantillons délivrés en sortie du deuxième filtrage, correspondant à l'échantillon optimal.

L'étape 45 comprend les sous-étapes suivantes :

- étape 451 : calcul d'une fonction discrète sur une fenêtre d'observation de durée $L \times T_S$, de l'amplitude moyenne des M échantillons par symbole stockés ayant des instants d'échantillonnage prédéfinis : $k \times T_S/M$ pour $0 \leq k < M-1$, et détermination du maximum,
- étape 452 : interpolation polynomiale pour déterminer un instant optimal noté x avec $0 \leq x < M$, correspondant au maximum d'un polynôme de degré supérieur ou égal à 2 passant par un nombre prédéfini de points de la fonction calculée à l'étape 451, dont le maximum,
- étape 453 : détermination de l'entier k le plus proche de la valeur $x \times N/M$ correspondant à l'instant précédemment calculé ramené à la précision recherchée pour déterminer l'instant d'échantillonnage optimal égal à $k \times T_S/N$ parmi les N instants possibles.

Pour le calcul d'interpolation effectué à l'étape 452, on effectuera de préférence une interpolation parabolique entre trois points parmi les M échantillons par symbole stockés dont les amplitudes moyennes ont été calculées à l'étape 451 parmi lesquels : l'échantillon d'indice B noté $S_B$ ayant l'amplitude moyenne maximum et les deux échantillons adjacents d'indices A et C notés $S_A$ et $S_C$ respectivement. Les amplitudes moyennes respectives de ces échantillons sont notées $F_B$, $F_A$ et $F_C$. Si $S_B$ est l'échantillon d'indice zéro, alors $S_A$ vaut -1 et son amplitude moyenne $F_A$ est égale à l'amplitude moyenne calculée pour l'échantillon d'indice M-1. Si $S_B$ est l'échantillon d'indice M-1, alors $S_C$ est égal à l'échantillon d'indice M et son amplitude moyenne $F_C$ est égale à celle calculée pour l'échantillon d'indice zéro. Une interpolation parabolique entre ces trois échantillons donne un instant x défini par l'équation :

$$x = B - \frac{1(B-A)^2(F_B-F_C)-(B-C)^2(F_B-F_A)}{2\ (B-A)(F_B-F_C)-(B-C)(F_B-F_A)} \qquad (1)$$

La valeur de x doit être comprise entre 0 et M. Si $x<0$ il faut ajouter M et si $x \geq M$ il faut soustraire M à la valeur de x obtenue par l'équation (1). L'étape 452 peut éventuellement être itérée plusieurs fois pour améliorer la précision du résultat en remplaçant B dans l'équation (1) par la valeur de x calculée à l'itération précédente et en affectant à $F_B$, $F_A$, $F_C$ et B, A, C respectivement, l'amplitude de l'échantillon à l'instant x et les amplitudes des deux échantillons voisins de x, parmi A, B et C ainsi que les instants d'échantillonnage correspondants.

## Revendications

1. Récepteur pour système de transmission par paquets comportant des moyens de réception pour recevoir un signal à une fréquence symbole ($F_S$), des moyens de sur-échantillonnage (18) pour générer des sur-échantillons ($S_0$ à $S_{M-1}$) à partir du signal reçu à une fréquence multiple de la fréquence symbole ($M \times F_S$) et un dispositif de recherche de l'instant d'échantillonnage optimal (22) pour estimer à partir des sur-échantillons générés un retard (x) correspondant au signal reçu, caractérisé en ce que lesdits moyens de réception comportent un filtre passe-bas (F2) et des moyens de centrage (26) pour centrer le filtre passe-bas en fonction dudit retard.

2. Récepteur selon la revendication 1, dans lequel le filtre passe-bas (F2) est un filtre numérique en racine de Nyquist dont les coefficients sont déterminés par lesdits moyens de centrage (26) en fonction dudit retard.

3. Récepteur selon la revendication 1, dans lequel le dispositif de recherche de l'instant d'échantillonnage optimal (25) comporte un organe de calcul (251) pour déterminer le maximum des amplitudes moyennes des sur-échantillons et un interpolateur (252) pour calculer un polynôme passant par au moins trois desdites amplitudes moyennes dont le maximum et pour en déduire ladite estimation de retard.

4. Système de transmission par paquets, d'au moins un émetteur (2) vers un récepteur (1), le récepteur comportant des moyens de réception pour recevoir un signal à une fréquence symbole ($F_S$), des moyens de sur-échantillonnage (18) pour générer des sur-échantillons ($S_0$ à $S_{M-1}$) à partir du signal reçu à une fréquence multiple de la fréquence symbole ($M \times F_S$) et un dispositif de recherche de l'instant d'échantillonnage optimal (25) pour estimer à partir des sur-échantillons générés un retard (x) correspondant au signal reçu, caractérisé en ce que lesdits moyens de réception comportent un filtre passe-bas (F2) et des moyens de centrage (26) pour centrer le filtre passe-bas en fonction dudit retard.

**5.** Procédé d'estimation d'un instant d'échantillonnage optimal en réception pour système de transmission par paquets, comportant :

- une étape de réception pour recevoir un signal dit signal reçu,
- une étape de sur-échantillonnage (42) pour générer des sur-échantillons à partir du signal reçu,
- une étape de recherche d'un instant d'échantillonnage optimal (45) pour estimer à partir des sur-échantillons générés un retard correspondant au signal reçu,

caractérisé en ce qu'il comporte :

- une étape de centrage (46) pour centrer un filtre passe-bas en fonction dudit retard et
- une étape de filtrage passe-bas (47) pour filtrer le signal reçu à l'aide du filtre passe-bas centré.

**6.** Procédé d'estimation d'un instant d'échantillonnage optimal en réception pour système de transmission par paquets, comportant :

- une étape de réception pour recevoir un signal dit signal reçu,
- une étape de sur-échantillonnage (42) pour générer des sur-échantillons à partir du signal reçu,
- une étape de recherche d'un instant d'échantillonnage optimal (45) pour estimer à partir des sur-échantillons générés un retard correspondant au signal reçu,

caractérisé en ce que l'étape de recherche de l'instant d'échantillonnage optimal (45) comporte une étape d'interpolation parabolique (452) pour déterminer le maximum d'une fonction des amplitudes moyennes desdits échantillons et pour en déduire une estimation dudit retard.

EP 1 100 223 A1

FIG.1

FIG.2

1

2
2
2

3

10

14

13
Fs

Q.L. 12

16
Fs

18
M.Fs

20
R
A
M
D×Ts

22

F1
L×Ts

25
OSE
k.Ts/N

26

M.Ts

F2
D×Ts

27
↓M
Fs

FIG.3

FIG. 4

| Office européen des brevets | RAPPORT DE RECHERCHE EUROPEENNE | Numéro de la demande EP 00 20 3836 |
|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 155 742 A (ARIYAVISITAKUL SIRIKIAT ET AL) 13 octobre 1992 (1992-10-13) * colonne 1, ligne 16-21 * * colonne 9, ligne 30-37 * * colonne 10, ligne 67 - colonne 11, ligne 11 * * colonne 12, ligne 32-37 * * colonne 13, ligne 10-22 * * colonne 16, ligne 40-47 * | 1,4-6 | H04L7/033 |
| A | US 4 325 090 A (JANAK MILOSLAV ET AL) 13 avril 1982 (1982-04-13) * colonne 1, ligne 6-25 * * colonne 2, ligne 60-68 * * colonne 3, ligne 44-53 * | 1,4-6 | |
| A | WO 99 30457 A (BELL COMMUNICATIONS RES) 17 juin 1999 (1999-06-17) * page 1, ligne 6-8 * * page 4, ligne 5-17 * * page 30, ligne 30 - page 31, ligne 10 * | 1,4-6 | **DOMAINES TECHNIQUES RECHERCHES** (Int.Cl.7) |
| A | US 5 036 297 A (NAKAMURA SEIZO) 30 juillet 1991 (1991-07-30) * colonne 1, ligne 5-7 * * colonne 2, ligne 44-58 * * colonne 3, ligne 10-16 * * colonne 5, ligne 1-10 * | 1,4-6 | H04L H04B |

Le présent rapport a été établi pour toutes les revendications

| Lieu de la recherche | Date d'achèvement de la recherche | Examinateur |
|---|---|---|
| LA HAYE | 9 février 2001 | Traverso, A |

**ANNEXE AU RAPPORT DE RECHERCHE EUROPEENNE**
**RELATIF A LA DEMANDE DE BREVET EUROPEEN NO.**

EP 00 20 3836

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

09-02-2001

| Document brevet cité au rapport de recherche | Date de publication | Membre(s) de la famille de brevet(s) | | Date de publication |
|---|---|---|---|---|
| US 5155742 A | 13-10-1992 | AUCUN | | |
| US 4325090 A | 13-04-1982 | DE | 2906200 A | 04-09-1980 |
| | | AT | 2031 T | 15-12-1982 |
| | | CA | 1134462 A | 26-10-1982 |
| | | DE | 3061295 D | 20-01-1983 |
| | | EP | 0015031 A | 03-09-1980 |
| | | JP | 1313128 C | 28-04-1986 |
| | | JP | 55114058 A | 03-09-1980 |
| | | JP | 60035863 B | 16-08-1985 |
| WO 9930457 A | 17-06-1999 | AU | 1618099 A | 28-06-1999 |
| US 5036297 A | 30-07-1991 | JP | 3096015 A | 22-04-1991 |
| | | DE | 4028520 A | 21-03-1991 |
| | | GB | 2236223 A,B | 27-03-1991 |

EPO FORM P0460

Pour tout renseignement concernant cette annexe : voir Journal Officiel de l'Office européen des brevets, No.12/82